# EUROPEAN PATENT SPECIFICATION

(11) **EP 2 887 799 B1**
(45) Date of publication and mention of the grant of the patent: **01.08.2018**
(21) Application number: 13832620.2
(22) Date of filing: 26.08.2013
(51) Int. Cl.: A01K 85/00, A01K 85/01

(54) **FISHING LURE**
ANGELKÖDER
LEURRE DE PÊCHE

(30) Priority: 27.08.2012 US 201261693501 P
(43) Date of publication of application: 01.07.2015
(73) Proprietor: Tsybulnyk, Sergiy, Burnaby, British Columbia V5A 7B7 (CA)
(72) Inventor: Tsybulnyk, Sergiy, Burnaby, British Columbia V5A 7B7 (CA)
(74) Representative: FRKelly
(86) International application number: PCT/CA2013/050661
(87) International publication number: WO 2014/032182

(56) References cited:
- WO-A1-2011/093719
- US-A- 5 694 714
- US-A- 6 050 022
- US-A1- 2005 257 418
- US-A1- 2008 271 358
- US-A1- 2010 005 700
- US-A1- 2010 126 058
- US-A1- 2010 293 832
- US-B1- 7 383 659

## Description

### TECHNICAL FIELD

The present disclosure pertains to fishing lures. More particularly, the disclosure pertains to motorized artificial fishing lures.

### BACKGROUND

Known artificial fishing baits, which are also called lures, have hooks and sometime appendages on their outer surface. When the bait is drawn through the water, the hooks and/or appendages cause the bait to wobble, or vibrate, which attracts fish to the bait.

Conventional fishing lures include spoons, which are commonly dish shaped pieces of metal that have a hook which revolves or wobbles as it is drawn through the water due to the curvature of the metal dish. Conventional fishing lures also include plugs or spinners which are roughly of a fish shape. The plug or spinner may also be or painted or patterned to look like a fish. The plug or spinner includes a lip which is slightly dished and which, on pulling the plug through the water, causes the plug or spinner to wobble so attracting fish to the bait.

Conventional fishing lures also include a dead fish that is mounted on hooks. The dead fish can be kept still so as to mimic a fish that has died or can be cast and retrieved by the fisherman or fisherwoman (hereafter referred to as an "angler") in order to mimic the movement of a live fish or an injured fish. Devices exist which can be inserted into a dead fish to give it some form of movement, usually in the form of a vibration or twitch. However, these devices require the angler to obtain and gut dead fish before the device is inserted. This process is messy and complicated and the dead fish loses its natural shape and appearance once the device is inserted. This detracts from the attractiveness of the lure to predatory fish.

Some anglers prefer to use live fish as bait. A live fish is mounted on hooks and cast out into the water. The fish wriggles to try and free itself from the hooks and this movement attracts predatory fish. Live baits are popular with some anglers because they are usually highly effective in attracting game fish. Fishing with such baits also has the advantage of removing the risk of snagging and losing expensive spoons, plugs or spinners, which have to be pulled through the water to simulate movement. However, many anglers consider the use of live bait to be cruel and chose not to use this method of baiting. Also, the use of live baits is prohibited in many jurisdictions and by many fishing groups and objected to by animal welfare groups. Further, obtaining live bait and keeping it alive while fishing is difficult, expensive and time consuming.

Artificial lures exist where the lures at least partially provide for their own movement and in a manner try to mimic a live fish. Examples include self-propelling lures consisting of three or four different casings that are assembled together around, amongst other things, a battery, a motor and a set of gears which drive the tail of the lure to and fro sideways. A disadvantage with these kinds of lures is that when a fish strikes the lure, the outer casings can be damaged or come apart thereby exposing the motor and battery to the water. Also, the inner parts of the lure are contained within a rigid casing which does not produce a natural swimming motion for the lure. Only the tail moves in lures of this type and this is different to live fish that swim by moving both their heads and tails. Another problem with these types of lures is that the battery, the motor and gears consist of numerous moving parts which are extremely noisy underwater and they are also prone to failure after a fish strikes the lure. Furthermore, because of their high complexity, the existing motorized self-propelled fishing lures are too bulky to enable reproduction of smaller life-like bait fish such as those exemplified by minnows.

A conventional fishing lure is known from document US 2010/005700 A1.

### SUMMARY

The invention relates to a motorized fishing lure according to claim 1, and to a kit of parts according to claim 13.

The exemplary embodiments of the present disclosure pertain to motorized fishing lures that comprise a framework housing therein a motorized drive unit and a energy supply for the motorized drive unit. The framework is integrally engaged with a leader loop and a loop for engaging a hook or alternatively a hook assembly. The framework is encased in a shell made of a pliable resilient material. The shell may be a one-piece unit comprising a sealable compartment that protects the drive unit from the external environment, and provides the fishing lures with lifelike appearances, textures, and feel. Alternatively, the shell may comprise two portions that are sealingly engagable to facilitate insertion and removal of the framework into and out of the shell. The drive unit causes the tail portions and/or the head portions of the fishing lures to move in a natural lifelike manner that attracts predatory fish.

### BRIEF DESCRIPTION OF THE DRAWINGS

The present disclosure will be described in conjunction with reference to the following drawings in which:
Figure 1 is a plan view of an exemplary motorized fishing lure according to an embodiment of the present disclosure;
Figure 2 is a perspective view of a motorized fishing lure according to another embodiment of the present disclosure with an area cut away to illustrate the interior of the lure;
Figure 3 is a perspective view of the motorized fishing lure according to an embodiment of the present disclosure with the side-portions pulled apart to display the compartment and drive unit;
Figure 4 is an exploded side view of an exemplary motorized fishing lure according to another embodiment of the present disclosure;
Figure 5 is an exploded perspective view of the motorized fishing lure shown in Figure 4;
Figure 6 is a perspective view of the assembled motorized fishing lure shown in Figures 4 and 5;
Figure 7 is a cross-sectional view of an exemplary motorized fishing lure according to another embodiment of the present disclosure; and
Figures 8(A)-8(C) are side views showing optional exchangeable tail components.

### DETAILED DESCRIPTION

The exemplary embodiments of the present disclosure pertain to motorized fishing lures that comprise a framework housing a motorized drive unit and a energy supply for the motorized drive unit. The framework is integrally engaged with a leader loop and a loop for engaging a hook or alternatively a hook assembly. The framework is encased in a shell having a lifelike appearance, textures, and feel of a natural bait fish. The shell comprises a pliable resilient material. The shell may be a one-piece unit comprising a sealable compartment that protects the drive unit from the external environment. Alternatively, the shell may comprise two portions that are sealingly engagable to facilitate insertion and removal of the framework into and out of the shell. The drive unit causes the tail portions and/or the head portions of the fishing lures to move in a natural lifelike manner that attracts predatory fish.

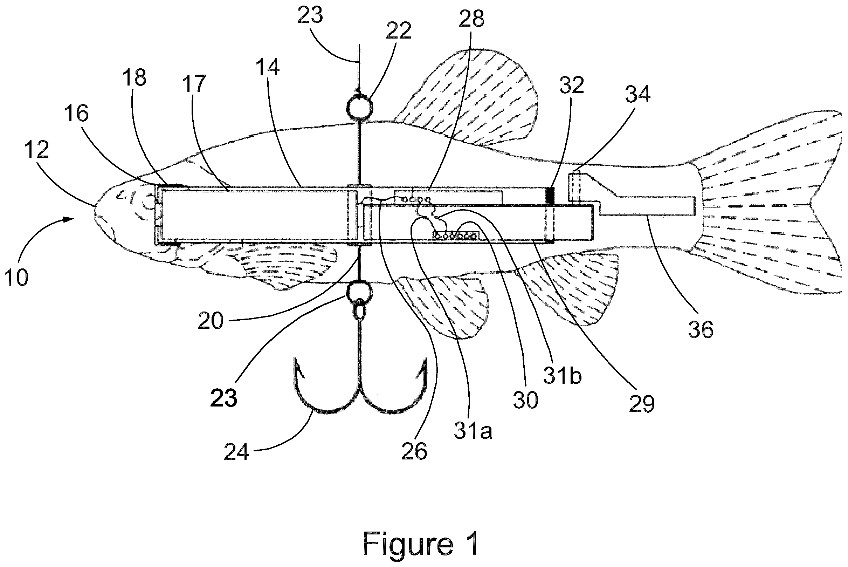

A first exemplary embodiment of the motorized fishing lure of the present disclosure is shown in Figure 1. The motorized fishing lure 10 has an outer shell 12 shaped and coloured and/or patterned in a way such that the lure 10 mimics the appearance of a selected type of bait fish.

The shell 12 is formed into an element that encases a mounting bracket 20 integrally engaged with a housing 14 containing therein a battery 17 and an actuator motor 29. The shell 12 is provided with a compartment into which the drive unit comprising the mounting bracket 20 and housing 14, is inserted and then sealed in place to provide a water impervious outer surface. The housing 14 generally extends from the anterior end i.e. the head portion of the lure 10 towards the posterior end with the actuator motor 29 engaging the tail portion of the lure 10.

Within the housing 14 is housed a battery 17 and an actuator motor 29. The housing 14 has a cap 16 that is pressed, twisted or sealed onto the housing 14 to form a water tight connection or seal. In addition, an O-ring 18 sits between the housing 14 and the cap 16 in order to minimize the potential for water to enter the housing 14 and contact with the battery 17 and the other mechanical and electrical parts situated therein (which are discussed in detail below). The housing 14 is made of a rigid material exemplified by metals, plastics, composites or any other suitable material that that is impervious to water.

The battery 17 housed within the housing 14 contacts a plate or receptacle (not shown) within the housing 14. A connecting wire 26 is attached to the plate or receptacle and transfers electrical charge from the battery 17 to a microcontroller 28. The microcontroller 28 can be housed within the housing 14, or alternatively, within the body of the actuator motor 29. The connecting wire 26 comprises a material that conducts electrical current.

The battery 17 may be a conventional battery that provides an electrical charge until all the stored electricity has been extracted. After that, the battery can be discarded. Alternatively, the battery 17 may be a rechargeable battery. The rechargeable battery may be recharged after removal from the lure, or alternatively, may be recharged whilst in the lure.

The microcontroller 28 is connected to an actuator motor contact board 30 via wires 31a and 31b (together "wires 31"). The wires 31 comprise a material that conducts electrical charge or current, or alternatively, which can transmit signals to the actuator motor contact board 30. The actuator motor contact board 30 is also within the housing 14 and is connected to or part of the actuator motor 29. The actuator motor contact board 30 is responsible for conveying the electrical current or charge (or other signals) from the microcontroller 28 to the actuator motor 29.

A first part of the actuator motor 29 is housed within the housing 14 and a second part of the actuator motor 29 extends outward from the housing 14 through a waterproof seal 32. The waterproof seal 32 permits a part of the actuator motor 29 to pass out of the housing 14 minimizing the potential for water seepage into the housing 14. The part of the actuator motor 29 extending outward from the housing 14 has an actuator motor drive shaft 34. The upper most part of the actuator motor drive shaft 34 can be seen in Figure 1. The remainder of the actuator motor drive shaft 34 passes through a recess in a tail rudder 36 and is represented in Figure 1 by dotted lines.

The actuator motor drive shaft 34 extends through a recess (not shown) in the tail rudder 36. The recess in the tail rudder 36 is of a suitable size and shape to receive the actuator motor drive shaft 34. When the tail rudder 36 and motor drive shaft 34 are coupled together, movement of the actuator motor drive shaft 34 causes the tail rudder 36 to move. The tail rudder 36 and the actuator motor drive shaft 34 are articulated together in the form of a joint so that when one element moves the other moves in the same or an opposite direction.

The actuator motor 29 is connected directly to the tail rudder 36 by motor drive shaft 34. The tail rudder 36 extends into the tail portion of the shell 12. It is important to note that the actuator motor 29 does not use gears to transfer the mechanical energy from the actuator motor 29 to the tail rudder 36. Without gears, the actuator motor 29 can transfer motive power to the tail rudder 36 significantly more quietly, i.e., nearly silent, compared to the types of motors used in conventional motorized fishing lures that use bushed or brushless electrical motors cooperating with intermeshing gears with or with clutch controls. Suitable actuator motors are exemplified by linear actuator motors, bi-directional rotary actuator motors, and the like. Particularly suitable motors for the present disclosure include nano-motors such as those manufactured by NanoMuscle Inc. (NanoMuscle Inc., Antioch, CA, USA) and exemplified by the NanoMuscle RS-70-CE 1131 motor and the like. Such motors have an integrated actuator which allows for direct drive without a gear box or clutch. Such actuator motors can change their linear dimension or an angular position of the drive shaft and provide a direct drive to fishing lure drone rudder without a gear box or clutch. Memory shape alloy actuators such as those by NanoMuscle actuators are particularly small and therefore reduce space requirements in the lure 10 and permit the lure 10 to be of a smaller size than conventional lures. For example, the lure 10 may be about 5 cm, or about 10 cm, or about 15 cm, or about 20 cm, or about 25 cm in length from head to tail.

An on/off switch (not shown) is located on or within the lure 10. The on/off switch permits an angler to switch the actuator motor 29 on and thereby start the movement of the tail portion and/or head portion of the lure 10. In a similar fashion, when the on/off switch is moved to the "off' position, the actuator motor 29 stops thereby ending the movement of the tail portion and/or head portion. In the "off' position the angler can store away the lure 10 after use which will preserve the energy in the battery 17 and extend the battery life. The on/off switch could be located anywhere on or in the lure 10 including on the housing 14, the mounting bracket 20, the leader loop 22, or the shell 12. Alternatively, the lure 10 may be switched on or off via a wireless connection to a remote-controlled switch (not shown).

The microcontroller 28 controls the operation of the actuator motor 29 by sending signals via the wires 31 to the actuator motor contact board 30 and the actuator motor 29. The actuator motor 29, when in "on" mode, moves the actuator motor drive shaft 34 in a radial cycling motion. The actuator motor drive shaft 34 is coupled to the tail rudder 36 in a manner that creates an articulating joint. When the actuator motor drive shaft 34 moves in a to and fro sideways motion (first in one direction and then in the opposite direction, for example left then right then left and so on) the tail rudder 36 moves. The movement of the tail portion of the lure 10 resembles a fish flapping its tail. The motorized lure 10 therefore mimics the movement of a bait fish. Further details of the movement of the pliable resilient shell 12 material are discussed below.

It is optional for two actuator motors to be joined end-to-end (not shown) so that one actuator motor moves the head portion while the second actuator motor moves the tail portion. In this configuration, the actuator motors can be separately controlled so that the head portion and the tail portion are moving at the same time. The movements may be synchronized or asynchronized. The actuator motors can also be controlled such that the movement of the tail portion is independent of the movement of the head portion. Alternatively, the actuator motors can be controlled so that one of tail portion and head portion is moving while other portion is still.

The "drive unit" comprises all the internal elements of the lure 10 and does not include the shell 12. The drive unit comprises a power source for providing electrical energy for movement of the lure 10. The power source may, for example, be the battery 17. The drive unit also includes a controller connected to the power source. The controller may be, for example, the microcontroller 28. The microcontroller 28 can be preprogrammed or programmable. Preprogrammed microcontrollers control movements of the lure according to permanently programmed logical scenarios. Programmable microcontrollers allow the end user to alter the lures' movement sequences according to certain fishing conditions and/or requirements. The controller may be connected to the power source by electrical wires or through direct contact. The controller is also connected to an actuator motor and the actuator motor converts the electrical energy from the power source into mechanical energy for moving parts of the lure 10. The drive unit also includes an articulating joint coupled to the actuator motor for converting the mechanical energy of the actuator motor into movement of the lure 10. The drive unit comprises all of the elements necessary to power the movement of the tail and/or head portions of the lure 10.

A mounting bracket 20 is integral with the housing 14. The mounting bracket 20 has a leader loop 22 which provides an attachment point for connecting the lure 10 to the angler's leader or line. The mounting bracket 20 also has a hook loop 23 for demountably engaging one or more hooks 24. The hook 24 may have one or more sharp points and barbs. The hook 24 may also be "barbless" and not have barbs. When a fish strikes the lure 10, the angler hopes the fish will bite the hook 24 and become attached to the hook 24. It is optional to demountably engage additional hooks with the leader loop 22 and/or the hook loop 23. The additional hooks may be any of a single-point hook or a double-point hook or a triple-point hook may be attached to the upper mounting leader loop to increase the hookability of the fishing lure 10. It is optional for the leader hoop 22 and the hook loop to be configured with electrical contacts so that the circuit between the battery 17 and the actuator motor is completed when the lure 10 is immersed with water thereby causing actuator motor 29 to rotate the drive shaft 34 which in turn causes tail rudder 36 to move in a to and fro sideways motion.

Motorized fishing lures of the present disclosure as exemplified in Figure 1 are provide with a shell 12 made of a polymeric material that permanently encases the drive unit 14. Such disposable lures may be provided simply with a drive unit 14 engaged with a battery, and on/off switch positioned on the shell 12 in a position that will be protected from inadvertent activation or inactivation. Such disposable fishing lures can be manufactured by placing a drive unit connected to a battery and one or more leaders into a mold, and then casting and curing the polymeric material about the drive unit 14. Such disposable fishing lures would be discarded after the encased battery is drained of electricity.

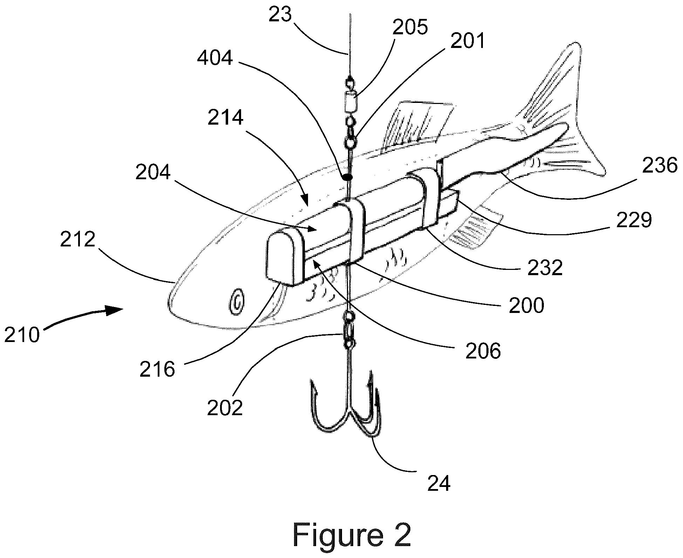

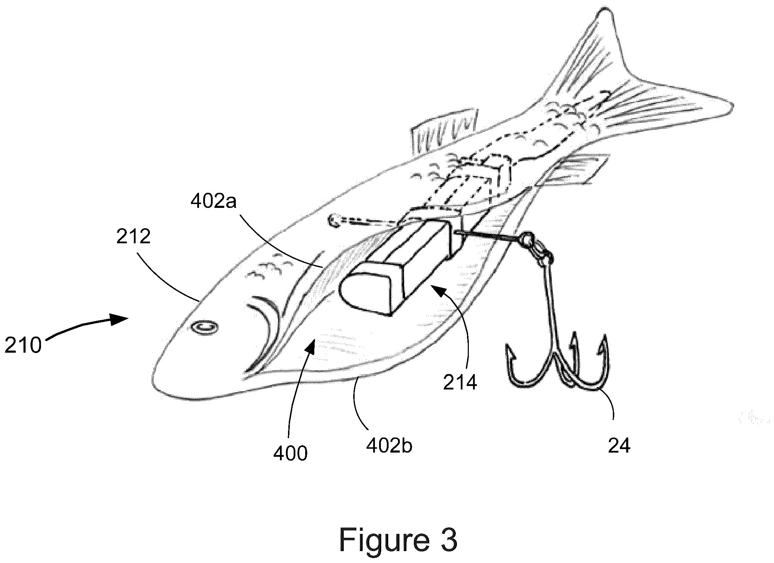

Another exemplary embodiment of the motorized fishing lure of the present disclosure is shown in Figures 2 and 3. The pliable and resilient shell 212 mimics the shape of a selected bait fish. The mounting bracket 200 is integral with the leader loop 201. The leader loop 201 may be demountably engaged with a swivel 205. A leader (not shown) is attachable to the other end of the swivel 205. The swivel 205 permits better rotation of the lure 210 without significant rotation on the leader. This helps to reduce knots and tangles in the leader. The mounting bracket 200 has a midportion that surrounds or alternatively is attached to the housing 14 and makes the mounting bracket 200 integral with the housing 14. The mounting bracket 200 has a hook 24 connected to it by a hook loop 202. The hoop 202 may be a solid ring of metal or alternatively may be a snap-link to allow the hook 24 to be attached and detached as is desired.

The housing 214 has an upper chamber 204 and a lower chamber 206. The cap 216 seals the interior of the housing 214 minimizing the potential for water seepage into the interior of the chambers 204, 206. The upper chamber 204 may contain the battery (not shown) and the lower chamber 206 may contain the other parts of the drive unit, such as, but not limited to, a microcontroller (not shown), an actuator motor 229, connecting wires (not shown). Alternatively, the battery may be located in the lower chamber 206. The elements of the drive unit are located within the housing 214 except for a part of the actuator motor 229 that extends out of the housing 214 by passing through the waterproof seal 232. The part of the actuator motor 229 that extends out of the housing 214 is coupled to the tail rudder 236 in the manner of an articulating joint. In Figure 2, the coupling means are not shown. The actuator motor 229 and the tail rudder 236 form an articulating joint so that the mechanical energy of the actuator motor 229 drives the tail portion of the lure 210 to move to and fro in a sideways motion and mimic the tail of a bait fish.

Referring now to Figure 3, the lure 210 has a compartment 400 into which the drive unit 214 is inserted. The shell 212 forms a solid upper portion i.e., the dorsal fin side 404 of the lure 210 and has two flanks that mimic the lateral sides of a bait fish. The two flanks are referred to as "the first side portion 402a" and "the second side portion 402b" and together are referred to as "the two side portions 402". One exemplary embodiment provides a shell 212 wherein the two side portions 402a, 402b can be separated along the bottom of the shell 12 and pulled apart by the angler to access compartment 400 in order to install or replace drive unit 214 into the compartment 400. After the drive unit 214 has been installed into compartment 400, the bottoms of the two side portions 402a, 402b are joined together thereby sealably encasing the drive unit 214. The inner-facing edges of bottoms of the two side portions 402a, 402b are preferably provided with an adhesive so that when the two side portions 402a, 402b are pressed together, they form a watertight and water-resistant seal around the drive unit 214 installed into compartment 400. The adhesive may be a permanent self-sealing adhesive that enables the two side portions 402a, 402b to be pulled apart and then sealably rejoined together a number of times without losing the ability to provide a watertight and water-resistant seal each time the two side portions 402a, 402b are joined together. Alternatively, the adhesive may be separately applied to the inner-facing edges of bottoms of the two side portions 402a, 402b just prior to joining the two side portions 402a, 402b. Suitable adhesives for such separate applications are exemplified by contact cements, rubber cements, polymeric glues, and the like. Alternatively, the shell 212 may be made of a polymeric material that is self-sealing when two surfaces are joined and pressed together. Alternatively, an adhesive may be applied to the inner-facing edges of the bottoms of the two side portions 402a, 402b and then individually covered with protective strips of non-adhesive material so that the bottoms of the two side portions 402a, 402b do not stick to each other until the protective strips are removed.

It is to be noted that the shell 212 has an aperture 404 in its uppermost surface through which the leader loop 201 passes so that leader loop 201 can extend from within the compartment 400 to the exterior of the lure 210. The aperture 404 sealingly contacts the leader loop 201 to minimize the seepage of water into the compartment 400. An angler can then connect a selected leader to the swivel 205 connected to the leader loop 201. In this exemplary embodiment, when the two side portions 402 are sealably engage along the underside of the lure 210, and the lure 210 resembles the natural shape of a bait fish except for the protruding leader loop 21 and protruding mounting bracket with the hook loop 202 to which hook 24 is demountably engaged. When the actuator motor 229 is switched on, the actuator motor 229 of the drive unit drives the tail rudder 236 so that the tail portion of the lure 210 moves like a bait fish. It is within the scope of the present disclosure to provide a second actuator (not shown) extending into the head portion of the lure 210 to cooperate with a head rudder (not shown) so that the head portion of the lure 210 can be moved to and fro in a sideways motion to mimic the movements of the head of a bait fish.

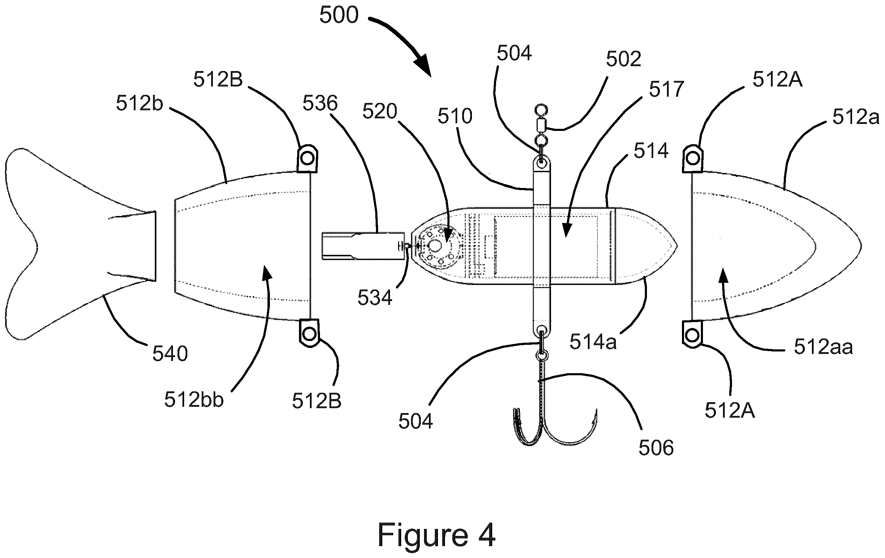

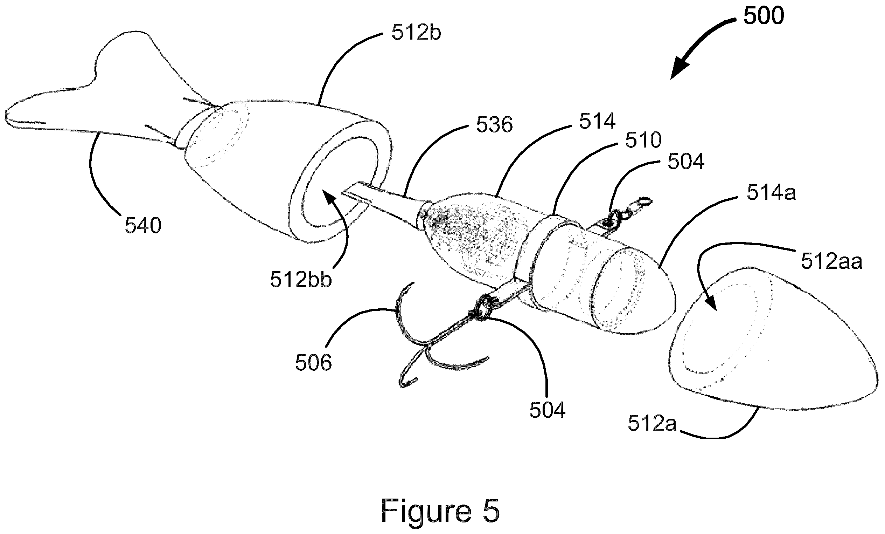

Figures 4-6 show another exemplary embodiment of the motorized fishing lure of the present invention. The lure 500 comprises a mounting bracket 510 for securely engaging therein a water-tight and water-impervious housing 514 containing a battery 517 and an electro-magnetic coil motor 520. The electro-magnetic coil motor 520 cooperates with a drive shaft 534 that is engaged with a tail rudder 536. One end of the housing 514 cooperates with a cap 514a that is disengagable from the housing 514 to enable removal and replacement of the battery 517. The cap 514a is sealingly engagable with the housing 514 to provide a water-tight and water-impervious environment for the battery 517 and the electro-magnetic coil motor 520. The housing 514 has an off/on switch (not shown) that may be manually operated, or alternatively, operated by remote control by a wireless device (not shown). One end of the mounting bracket 510 has an aperture for engaging a first split ring 504, which in turn may engage a swivel 502. The other end of the mounting bracket 510 has an aperture for engaging a second split ring 504, which in turn may engage a hook assembly 506. It is optional to substitute a cross-lock snap for one or both split rings 504. It is also optional to provide a second actuator motor (not shown) into the cap 514a with a drive shaft and head rudder extending forward.

In this exemplary embodiment, the outer shell is a three-component shell wherein the first component is a front-end portion 512a, the second component is a body portion 512b, and the third component is a detachable tail 540 that engages the tail rudder 536. The front-end portion 512a has a cavity 512aa for receiving therein the cap 514a and the front end of the housing 514. The body portion 512b has a cavity 514bb for receiving therein the back end of the housing 514 and for sealingly receiving therethrough the tail rudder 536, and optionally, the drive shaft 534. A first tab 512A having an aperture, is provided on the top of the front portion 512a at its open end, and partially extends out from the open end of the front portion 512a. A second tab 512A having an aperture, is provided at the bottom of the front portion 512a at its open end, and partially extends out from the open end of the front portion 512a. A first tab 512B having an aperture, is provided on the top of the body portion 512b at its open end, and partially extends out from the open end of the bottom portion 512b. A second tab 512B having an aperture, is provided at the bottom of the bottom portion 512b at its open end, and partially extends out from the open end of the bottom portion 512b. The front end of the housing 514 is mounted into the cavity 512aa of the front portion 512a while the tail rudder 536 followed by the drive shaft 534 are slipped through an aperture provided therefore in the body portion 512b after which, the back end of the housing 514 is mounted into the cavity 512B of the body portion 512b. The apertures in the upper and lower tabs 512A on the front portion 512a are aligned with the apertures in the upper and lower tabs 512B on the body portion and the apertures provided on the mounting member 510, and then are fixed in place with the split rings 504. The detachable tail 540 is then engaged with the tail rudder 536 by inserting the tail rudder 536 into an aperture provided therefor in the detachable tail 540.

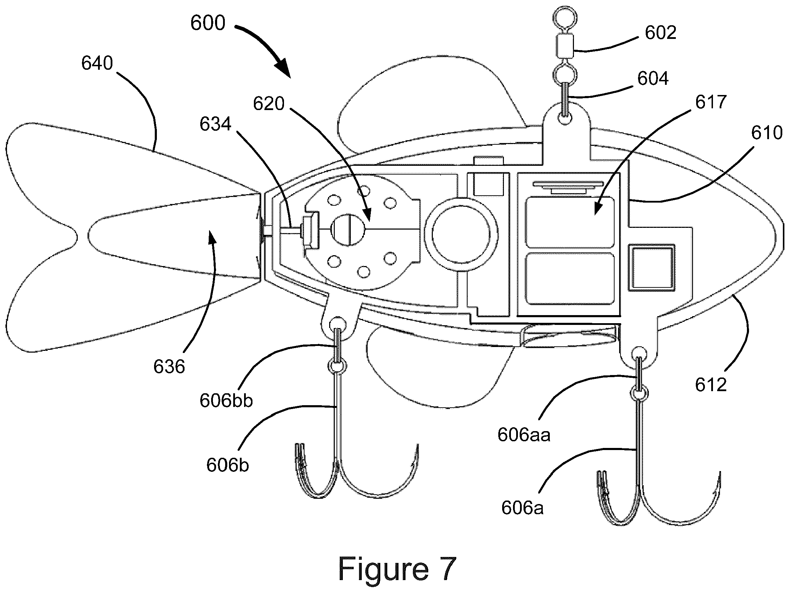

Another exemplary embodiment of the motorized fishing lure of the present invention is shown in Fig. 7. The lure 600 comprises a mounting bracket 610 comprising a framework with mounting points for securely engaging therein a first water-tight and water-impervious housing containing a battery 617, and a second water-tight and water-impervious housing containing an actuator motor 620 (or alternatively, an electro-magnetic coil motor). The actuator motor 620 cooperates with a drive shaft 634 that is engaged with a tail rudder 636. The housing for either the batter 617 or alternatively the actuator motor 620 may have an off/on switch (not shown) that may be manually operated, or alternatively, operated by remote control by a wireless device (not shown). The framework comprising the mounting bracket 610 has a tab along the upper section of the framework with an aperture for engaging a first split ring 604, which in turn may engage a swivel 602. The lower section of the framework comprising the mounting bracket 510 has two tabs with apertures for engaging split rings 606aa, 606bb, which in turn may engage hook assemblies 606a, 606b respectively. It is optional to substitute a cross-lock snap for any of split rings 604, 606aa, 606bb.

In this exemplary embodiment, the outer shell is a three-component shell wherein the first component is a longitudinal side portion 612 to cover one side of the framework comprising the mounting bracket 610, the second component is a complimentary side portion (not shown) for covering the other side of the framework comprising the mounting bracket 610, and the third component is a detachable tail 640 that engages the tail rudder 636. The side portions have tabs with apertures positioned to align with the apertures in the tabs provided on the framework comprising the mounting bracket 610. The two side portions 612 are joined and held together by the split rings 604, 606aa, 606bb. The detachable tail 640 is then engaged with the tail rudder 636 by inserting the tail rudder 636 into an aperture provided therefor in the detachable tail 640.

The pliable and resilient shell disclosed herein and exemplified in Fig. 1 as shell 12, in Fig. 2 as shell 212, in Fig. 4 as shell components 512a, 512b, 540, and in Fig. 7 as shell components 612, 640, mimics the shape of a selected bait fish. The shell comprises a pliable resilient material. For example, the shell components may be made of polyvinyl chloride, plastisol, biodegradable soft plastics and the like. The pliable resilient material may be in the form of a solution or a liquid which hardens upon contact with an agent such air, heat, cold, a catalyst and the like.

The shell components may be coloured or impregnated with attractive smells of flavours or light reflecting particles, bubbles and the like to enhance the attractiveness of the shell to predator game fish. For example, scents and/or flavours can be mixed into fluid mixtures of polymeric components before they are polymerized so that the scents and flavours are sequestered within and elutable from the shell.

If so desired, the inner compartments or surfaces of the shell components may be injected with liquid fish attractant. Alternatively, the liquid fish attractant may be placed along the outer surface of the underside of the housing. The attractant will seep out of or leach out of passageways such as leader and hook mounting holes, imperfections in the compartment seals and other such routes, and thereby make the fishing lure even more attractive to game fish.

Another exemplary embodiment of the present disclosure pertains to a fishing lure comprising an outer shell component in one or more of the various forms disclosed herein, into which a conventional battery-powered electrical motor has been encased for providing a motive force to the tail portion of the fishing lure. Suitable electrical motors for use in this embodiment are exemplified by motors having rotating armatures, motors comprising coil and breaker systems, motors comprising coil and plunger systems, and the like. The motive forces produced by such electrical motors may be transferred to a rudder provided in the tail portion of the fishing lure through, for example, a set of gears to a shaft contacting strike points or pins provided on the rudder. In such configurations, an opposite return motion of the tail portion may be provided by a spring fixed to the rudder. Alternatively, the motive power may be transmitted from the electrical motor to the rudder in the tail portion of the lure by a cam mounted onto the distal end of the rotating armature, that rotationally contacts the rudder in the tail portion. Alternatively, the motive power may be transmitted from the electrical motor to the rudder in the tail portion of the lure by an unbalancing element mounted onto the distal end of the rotating armature, that rotationally contacts strike points or pins provided on the rudder in the tail portion. For example, the unbalancing element may be engaged with and extend from ¼ of the circumference of the armature, alternatively from ½ of the circumference of the armature, or from ¾ of the circumference of the armature. Alternatively, the motive power may be transmitted from the electrical motor to the rudder by a plunger cooperating with the electrical motor to provide a backward and forward reciprocating motion.

The tail portion, the head portion or both the tail portion and the head portion can move to mimic a swimming bait fish. By moving it will be generally understood that head and tail portions of the lure 10 will move from side to side to mimic a swimming fish, or alternatively, a fish in distress. For example, the tail will move from a starting position to the left and then back to the starting position and then to the right and back to the starting position, and so on. This sideways motion to and fro mimics the swimming movement of the tail of a fish. This back and forth movement causes the tail portion to flap from side to side.

The fishing lure's movements are controlled by a microcontroller. The microcontroller can either be custom programmed by the user and/or be provided with factory preset options. For example, the angler can set the amplitude of the motion which determines the degree of sideways movement that the tail portion and/or the head portion move. In a similar fashion, the angler can set the rate of motion which alters the frequency or rate at which the head or tail portions move in a sideways motion. The angler can also select a to and fro sideways motion where the lure oscillates in a steady uninterrupted rhythm. Or the angler can select a motion of a variable or intermittent nature. By choosing the desired settings, the angler can adapt the fishing lure to the particular predatory fish he or she is after. For example, the movement may, instead of being oscillating, be of a variable or intermittent nature so that, for example, the fishing lure may move and then be still for a given amount of time, say 5 seconds, or 10 seconds, or 20 seconds, and then move again. The periods of time for resting and moving can be programmed by the angler and/or selected from pre-determined settings. An example of a sequence of operations that may resemble the behaviour of a real bait fish includes: swim fast for 5 seconds, vibrate for 2 seconds, come to a full stop, pause for 4 seconds and then swim slowly for 5 seconds.

In alternative exemplary embodiments, a relay switch (not shown) may be used instead of the microcontroller. A relay switch provides a simpler and lower cost mechanism but does not have the variety of settings provided for by the microcontroller.

In alternative exemplary embodiments, wireless custom programming is optional.

In alternative exemplary embodiments, a small vibratory motor can be incorporated within the shell to additionally provide vibrations to the motion sequences.

In alternative exemplary embodiments, the outer shell may be impregnated with air or a material that is lower in density than water to provide the fishing lure with neutral or positive buoyancy. In yet further exemplary embodiments, the drive unit may be connected to a material that is lower in density than water to provide the lure 10 with neutral or positive buoyancy.

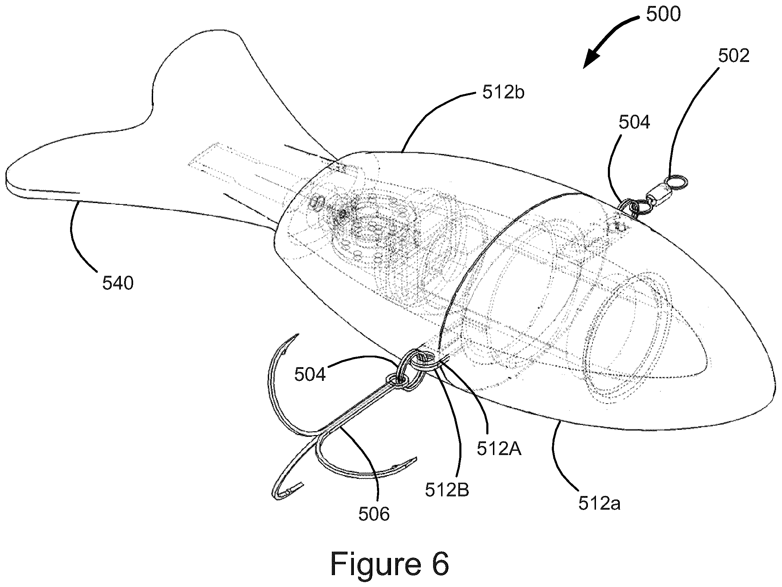

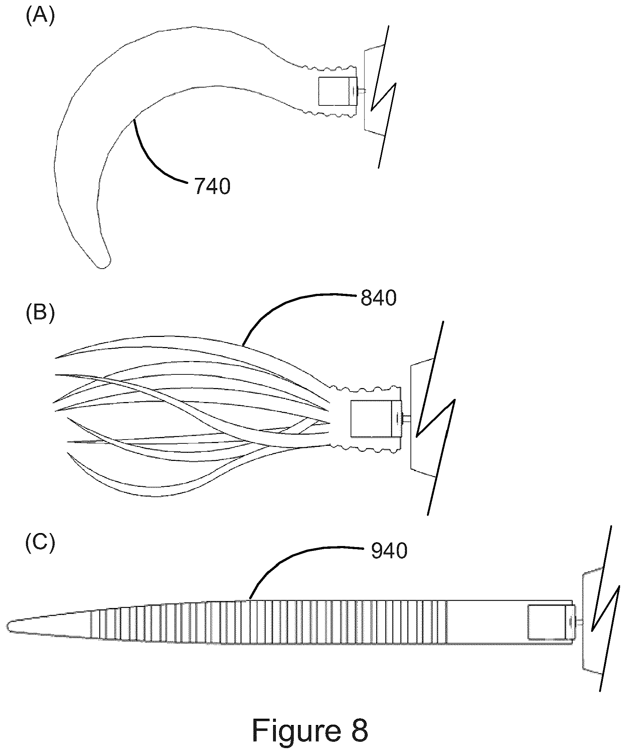

While the exemplary embodiments disclosed herein describe lures in the shapes of various types of bait fish, it should be understood that a lure embodying the principles of the present disclosure could be provided in any one of numerous alternative representations such as shrimps, frogs, worms, crayfish, large insects, and/or any other suitable fish baits. In the embodiment shown in Figures 1, 6, 7, the outer shell is shaped so as to mimic the appearance of a bait fish so it has the anatomical features of a minnow including a head, eyes, tail and fins. However, it is optional, in reference to the exemplary fishing lures shown in Figures 6, 7, to provide exchangeable tail components for demountably engaging the tail rudders. Some suitable shapes for exchangeable tail components are exemplified by Figures 8(A), 8(B), 8(C).

Other exemplary embodiments of the disclosure pertain to kits of parts whereby an angler can assemble the fishing lures described herein. The kits are exemplified in Figures 1-3 and include a drive unit 14 integrally engaged to a mounting bracket 20. The mounting bracket 20 may be connected to a leader loop 22 and one or more hooks 24. The kit also includes a shell 12 having a compartment 400. The two side portions 402 of the shell 12 can be pulled apart and the drive unit and mounting bracket 20 inserted by the user into the compartment 400. The leader loop 22 of the mounting bracket 20 passes through the hole 404 of the shell 12 and is available to be connected to the leader. The two side portions 402 are pushed together enclosing the drive unit within the compartment 400. The two side portions 402 may be secured together using the self-sealing means described earlier. Once the lure 10 is assembled, the hook 24 will remain exterior to the shell 12 and hang below the lure 10.

In an alternative embodiment, the kit of parts includes moulds in the shapes of various bait fish and a volume of liquid plastic (or a powder that can be mixed with a liquid to form a solution) that can be poured into the moulds. The liquid will set in the moulds on contact with an agent such as air, heat, cold, *etc,* and form shells 12. The drive unit integral to the mounting bracket 20 can either be set in the mould by placing it into the liquid or solution before it hardens or may be inserted after the shell 12 has hardened. Various sizes and shapes of moulds can be provided to permit that the angler to adapt the lures 10 to the particular requirements of the lake, river, or target fish. Also, the liquid plastic can be provided with a hardener or softener agent to permit the user to develop a shell 12 that has the required durability, texture, and appearance.

## Claims

1. A motorized fishing lure (10) comprising:
(a) a water-impermeable housing (14) containing therein a drive unit comprising a power source for providing electrical energy, a controller connected to the power source (17), a motor (29) connected to the controller for converting the electrical energy into mechanical energy and an articulating joint (34, 36) coupled to the motor (29) for converting the mechanical energy into movement of the fishing lure (10);
(b) a mounting bracket (20) for receiving therethrough and engaging therein the water-impermeable housing (14) containing the drive unit, said mounting bracket (20) having a first aperture (22) about its top end and a second aperture (23) about its bottom end, said apertures for demountably engaging one or more of a swivel, a snap-lock, a split ring, a leader, a hook, and a hook assembly; and
(c) a replaceable pliable resilient shell (12) for receiving and sealingly encasing therein the mounting bracket (20) and the housing (14).

2. The motorized fishing lure of claim 1, wherein the drive unit is encased within the water-tight water-impervious housing.

3. The motorized fishing lure of claim 1, wherein the motor is an actuator motor.

4. The motorized fishing lure of claim 1, wherein the motor is a linear actuator motor.

5. The motorized fishing lure of claim 1, wherein the motor is a bi-directional rotary actuator motor.

6. The motorized fishing lure of claim 1, wherein the motor is an electrical motor having a rotating armature.

7. The motorized fishing lure of claim 1, wherein the motor Is an electro-magnetic coil motor.

8. The motorized fishing lure of claim 1, wherein the drive unit is permanently encased within the pliable resilient shell.

9. The motorized fishing lure of claim 1, wherein the pliable resilient shell is provided with a chamber for housing therein said drive unit, the chamber accessible through a sealingly engageable aperture provided therefore in the pliable resilient shell.

10. The motorized fishing lure of claim I, wherein the pliable resilient shell comprises two sealably engageable portions, wherein a first shell portion has a cavity for receiving therein a portion of the support bracket and drive unit and the second shell portion has a cavity for receiving therein a remaining portion of the support bracket and drive unit.

11. The motorized fishing lure of claim I, wherein the pliable resilient shell has a separate tail component that is demountably engageable with an articulating rudder component cooperating with and extending from the drive unit.

12. The motorized fishing lure of claim 1, wherein the first aperture and the second aperture have electrical contacts communicating with the power source and the motor.

13. A kit of parts for constructing therefrom a motorized fishing lure (10), the kit of parts comprising:
(a) a water-impermeable housing (14) containing therein a drive unit housing a motor (29), a battery (17) receptacle, and an articulated joint (34, 36) coupled to the motor (29) for converting mechanical energy into movement of the fishing lure (10);
(b) a mounting bracket (20) for receiving therethrough and engaging therein the water-impermeable housing (14) containing the drive unit, said mounting bracket (20) having a first aperture (22) about its top end and a second aperture (23) about its bottom end, said apertures for demountably engaging one or more of a swivel, a snap-lock, a split ring, a leader, a hook, and a hook assembly; and
(c) a replaceable pliable resilient shell (12) for receiving and sealingly encasing therein the mounting bracket (20) and the housing (14).

14. The kit of parts of claim 13, additionally comprising packaging for containing therein said parts.

15. The kit of parts of claim 13, additionally comprising one or more of the swivel, the snap-lock, the split ring, the leader, the hook, and the hook assembly.

16. The kit of parts of claim 13, wherein the pliable resilient shell material is a preformed material.

17. The kit of claim 13, wherein the shell material comprises a polymeric casting material and mold for receiving and forming and curing the polymeric casting material.

18. The kit of parts of claim 13, wherein the motor is an actuator motor.

19. The kit of parts of claim 13, wherein the motor is an electrical motor having a rotating armature.

20. The kit of parts of claim 13, wherein the motor is an electro-magnetic coil motor.

21. The kit of parts of claim 13, wherein the first aperture and the second aperture have electrical contacts communicating with the power source and the motor.

## Patentansprüche

1. Motorisierter Fischköder (10), umfassend:
(a) ein wasserundurchlässiges Gehäuse (14), das darin eine Antriebseinheit enthält, umfassend eine Stromquelle zum Bereitstellen von elektrischer Energie, eine Steuerung, die mit der Stromquelle (17) verbunden ist, einen Motor (29),
der mit der
Steuerung verbunden ist, um die elektrische Energie in mechanische Energie umzuwandeln, und eine gelenkige Verbindung (34, 36), die mit dem Motor (29) gekoppelt ist,
um die mechanische Energie in Bewegung des Fischköders (10) umzuwandeln;
(b) eine Halterung (20),
um das wasserundurchlässige
Gehäuse (14), das die Antriebseinheit enthält, dadurch aufzunehmen und darin einzugreifen, wobei die Halterung (20) eine erste Öffnung (22)
um ihr oberes Ende herum aufweist und eine
zweite Öffnung (23) um ihr unteres Ende herum, wobei die Öffnungen abnehmbar in eines oder mehrere von einem Kugelgelenk, einem Schnappschloss, einem Spaltring, einem Kopf, einem Haken und einer Hakenanordnung eingreifen; und
(c) eine auswechselbare biegsame elastische Schale (12), um die Halterung (20) und das Gehäuse (14) darin aufzunehmen und abdichtend zu umhüllen.

2. Motorisierter Fischköder nach Anspruch 1, wobei die Antriebseinheit innerhalb des wasserdichten, wasserundurchlässigen Gehäuses umhüllt ist.

3. Motorisierter Fischköder nach Anspruch 1, wobei der Motor ein Stellmotor ist.

4. Motorisierter Fischköder nach Anspruch 1, wobei der Motor ein linearer Stellmotor ist.

5. Motorisierter Fischköder nach Anspruch 1, wobei der Motor ein bidirektionaler Drehbetätigungsmotor ist.

6. Motorisierter Fischköder nach Anspruch 1, wobei der Motor ein elektrischer Motor mit einem Drehanker ist.

7. Motorisierter Fischköder nach Anspruch 1, wobei der Motor ein elektromagnetischer Schwingspulenmotor ist.

8. Motorisierter Fischköder nach Anspruch 1, wobei die Antriebseinheit permanent innerhalb der biegsamen elastischen Schale umhüllt ist.

9. Motorisierter Fischköder nach Anspruch 1, wobei die biegsame elastische Schale mit einer Kammer versehen ist, um darin die Antriebseinheit zu beherbergen, wobei die Kammer durch eine abdichtend eingreifbare Öffnung, die dafür in der biegsamen elastischen Schale bereitgestellt ist, zugänglich ist.

10. Motorisierter Fischköder nach Anspruch I, wobei die biegsame elastische Schale zwei abdichtend eingreifbare Abschnitte umfasst, wobei ein erster Schalenabschnitt eine Vertiefung aufweist, um darin einen Abschnitt der Stützhalterung und Antriebseinheit aufzunehmen, und der zweite Schalenabschnitt eine Vertiefung aufweist, um darin einen verbleibenden Abschnitt der Stützhalterung und Antriebseinheit aufzunehmen.

11. Motorisierter Fischköder nach Anspruch I, wobei die biegsame elastische Schale eine separate hintere Komponente aufweist, die abnehmbar mit einer Ruderkomponente eingreifbar ist, die mit der Antriebseinheit zusammenarbeitet und sich davon erstreckt.

12. Motorisierter Fischköder nach Anspruch 1, wobei die erste Öffnung und die zweite Öffnung elektrische Kontakte aufweisen, die mit der Stromquelle und dem Motor kommunizieren.

13. Set von Teilen zum Aufbauen eines motorisierten Fischköders (10) daraus, wobei das Set von Teilen Folgendes umfasst:
(a) ein wasserundurchlässiges Gehäuse (14), das darin einen Antriebseinheit-Gehäusemotor (29), einen Batteriebehälter (17) und eine gelenkige Verbindung (34, 36) enthält, die mit dem
Motor (29) gekoppelt ist, um mechanische Energie in Bewegung des Fischköders (10) umzuwandeln;
(b) eine Halterung (20), um das wasserundurchlässige Gehäuse (14), das die Antriebseinheit enthält, dadurch aufzunehmen und darin einzugreifen, wobei die Halterung (20) eine erste Öffnung (22) um ihr oberes Ende herum aufweist und eine zweite Öffnung (23)
um ihr unteres Ende herum, wobei die Öffnungen auswechselbar in eines oder mehrere von einem Kugelgelenk, einem Schnappschloss, einem Spaltring, einem Kopf, einem Haken und einer Hakenanordnung eingreifen; und
(c) eine auswechselbare biegsame elastische Schale (12), um die Halterung (20) und das Gehäuse (14) darin aufzunehmen und abdichtend zu umhüllen.

14. Set von Teilen nach Anspruch 13, zusätzlich umfassend Verpackung, um darin die Teile zu enthalten.

15. Set von Teilen nach Anspruch 13, zusätzlich umfassend eines oder mehrere von dem Kugelgelenk, dem Schnappschloss, dem Spaltring, dem Kopf, dem Haken und der Hakenanordnung.

16. Set von Teilen nach Anspruch 13, wobei das biegsame elastische Schalenmaterial ein vorgeformtes Material ist.

17. Set von Teilen nach Anspruch 13, wobei das Schalenmaterial ein polymeres Gussmaterial und Form zum Aufnehmen und Bilden und Härten des polymeren Gussmaterials umfasst.

18. Set von Teilen nach Anspruch 13, wobei der Motor ein Stellmotor ist.

19. Set von Teilen nach Anspruch 13, wobei der Motor ein elektrischer Motor mit einem Drehanker ist.

20. Set von Teilen nach Anspruch 13, wobei der Motor ein elektromagnetischer Schwingspulenmotor ist.

21. Set von Teilen nach Anspruch 13, wobei die erste Öffnung und die zweite Öffnung elektrische Kontakte aufweisen, die mit der Stromquelle und dem Motor kommunizieren.

## Revendications

1. Leurre de pêche motorisé (10) comprenant :
(a) un boîtier imperméable à l'eau (14) contenant dans celui-ci une unité d'entraînement comprenant une source d'énergie pour fournir de l'énergie électrique, un régulateur connecté à la source d'énergie (17), un moteur (29) connecté au régulateur pour convertir l'énergie électrique en énergie mécanique et un joint d'articulation (34, 36) couplé au moteur (29) pour convertir l'énergie mécanique en mouvement du leurre de pêche (10) ;
(b) un support de fixation (20) pour recevoir à travers celui-ci et solidariser dans celui-ci le boîtier imperméable à l'eau (14) contenant l'unité d'entraînement, ledit support de fixation (20) possédant une première ouverture (22) au niveau de son extrémité supérieure et une seconde ouverture (23) au niveau de son extrémité inférieure, lesdites ouvertures permettant de solidariser de façon amovible un ou plusieurs des éléments suivants : un émerillon, un mousqueton, une bague fendue, un lest en plomb, un hameçon et un ensemble hameçon ; et
(c) une enveloppe pliable résiliente remplaçable (12) pour recevoir et recouvrir de manière scellée à l'intérieur de celle-ci le support de fixation (20) et le boîtier (14).

2. Leurre de pêche motorisé selon la revendication 1, dans lequel l'unité d'entraînement est enfermée dans le boîtier étanche et imperméable.

3. Leurre de pêche motorisé selon la revendication 1, dans lequel le moteur est un moteur d'actionneur.

4. Leurre de pêche motorisé selon la revendication 1, dans lequel le moteur est un moteur d'actionneur linéaire.

5. Leurre de pêche motorisé selon la revendication 1, dans lequel le moteur est un moteur d'actionneur rotatif bidirectionnel.

6. Leurre de pêche motorisé selon la revendication 1, dans lequel le moteur est un moteur électrique possédant une armature rotative.

7. Leurre de pêche motorisé selon la revendication 1, dans lequel le moteur est un moteur à bobine électromagnétique.

8. Leurre de pêche motorisé selon la revendication 1, dans lequel l'unité d'entraînement est enfermée de manière permanente dans l'enveloppe pliable résiliente.

9. Leurre de pêche motorisé selon la revendication 1, dans lequel l'enveloppe pliable résiliente est fournie avec une chambre pour abriter à l'intérieur de celle-ci ladite unité d'entraînement, la chambre étant accessible via une ouverture pouvant être solidarisée de manière hermétique fournie à cet effet dans l'enveloppe pliable résiliente.

10. Leurre de pêche motorisé selon la revendication 1, dans lequel l'enveloppe pliable résiliente comprend deux sections pouvant être solidarisées de manière hermétique, dans lequel une première section d'enveloppe possède une cavité pour recevoir à l'intérieur de celle-ci une section du support de fixation et l'unité d'entraînement et la seconde section d'enveloppe possède une cavité pour recevoir à l'intérieur de celle-ci une section restante du support de fixation et l'unité d'entraînement.

11. Leurre de pêche motorisé selon la revendication 1, dans lequel l'enveloppe pliable résiliente possède un composant de queue séparé qui peut être solidarisé de manière amovible avec un composant de gouvernail articulé coopérant avec et s'étendant à partir de l'unité d'entraînement.

12. Leurre de pêche motorisé selon la revendication 1, dans lequel la première ouverture et la seconde ouverture possèdent des contacts électriques communiquant avec la source d'énergie et le moteur.

13. Ensemble de pièces pour construire, à partir de celles-ci, un leurre de pêche motorisé (10), l'ensemble de pièces comprenant :
(a) un boîtier imperméable à l'eau (14) contenant dans celui-ci un boîtier d'unité d'entraînement, un moteur (29), un réceptacle de batterie (17) et un joint articulé (34, 36) couplé au moteur (29) pour convertir de l'énergie mécanique en mouvement du leurre de pêche (10) ;
(b) un support de fixation (20) pour recevoir à travers celui-ci et solidariser dans celui-ci le boîtier imperméable à l'eau (14) contenant l'unité d'entraînement, ledit support de fixation (20) possédant une première ouverture (22) au niveau de son extrémité supérieure et une seconde ouverture (23) au niveau de son extrémité inférieure, lesdites ouvertures permettant de solidariser de façon amovible un ou plusieurs des éléments suivants : un émerillon, un mousqueton, une bague fendue, un lest en plomb, un hameçon et un ensemble hameçon ; et
(c) une enveloppe pliable résiliente remplaçable (12) pour recevoir et recouvrir de manière scellée à l'intérieur de celle-ci le support de fixation (20) et le boîtier (14).

14. Ensemble de pièces selon la revendication 13, comprenant en supplément un emballage pour contenir à l'intérieur de celui-ci lesdites pièces.

15. Ensemble de pièces selon la revendication 13, comprenant en supplément un ou plusieurs des éléments suivants :
l'émerillon, le mousqueton, la bague fendue, le lest en plomb, le hameçon et l'ensemble hameçon.

16. Ensemble de pièces selon la revendication 13, dans lequel le matériau de l'enveloppe pliable résiliente est un matériau préformé.

17. Ensemble selon la revendication 13, dans lequel le matériau de l'enveloppe comprend un matériau de moulage polymérique et un moule pour recevoir et former et durcir le matériau de moulage polymérique.

18. Ensemble de pièces selon la revendication 13, dans lequel le moteur est un moteur d'actionneur.

19. Ensemble de pièces selon la revendication 13, dans lequel le moteur est un moteur électrique possédant une armature rotative.

20. Ensemble de pièces selon la revendication 13, dans lequel le moteur est un moteur à bobine électromagnétique.

21. Ensemble de pièces selon la revendication 13, dans lequel la première ouverture et la seconde ouverture possèdent des contacts électriques communiquant avec la source d'énergie et le moteur.
